# EUROPEAN PATENT APPLICATION

(11) **EP 4 360 469 A1**
(43) Date of publication of application: **01.05.2024**
(21) Application number: 22828551.6
(22) Date of filing: 24.06.2022
(51) Int. Cl.: A23L 5/42, A23L 13/00

(54) **FOOD-PRODUCT BROWNING AGENT**

(30) Priority: 25.06.2021 JP 2021106078
(71) Applicant: Amano Enzyme Inc., Nagoya-shi Aichi 460-8630 (JP)
(72) Inventor: SAKAI, Kiyota, Kakamigahara-shi, Gifu 509-0109 (JP)
(74) Representative: Müller-Boré & Partner Patentanwälte PartG mbB
(86) International application number: PCT/JP2022/025403
(87) International publication number: WO 2022/270635

(57) **Abstract**

The purpose of the present invention is to provide a food product additive with which it is possible to further enhance browning characteristics. Provided is a food-product browning agent containing (A) a pigment compound selected from the group consisting of betalains, anthocyans, curcuminoids, polyhydroxychalcones, and polyhydroxyanthraquinones, (B) multicopper oxidase, and (C) a polysaccharide, said food-product browning agent reproducing a color prior to heating of a food product by being added to the food product, and browning the food product by more effectively fading during heating. Therefore, it is possible to more realistically reproduce a color change that occurs during heating.

## Description

### TECHNICAL FIELD

The present invention relates to a browning agent for a food product which is an additive that browns a food product during heating.

### BACKGROUND ART

In response to recent social problems such as food product loss, reduction of environmental load, and diversified consumer needs, substitute meat products using plants such as soy and peas as raw materials have attracted attention worldwide. As a color reproduction method of a substitute meat, a method for adding soy legume hemoglobin (also referred to as soy leghemoglobin) to a substitute meat and a method for adding a beet pigment to a substitute meat are known.

The method using a beet pigment is easy to be accepted by consumers because the beet as the raw material has been eaten for a long time in the world. In addition, it is known that the beet pigment is red and fades by heat. The substitute meat to which the beet pigment is added is required not only to reproduce the color but also to reproduce characteristics of changing to brown by heat-cooking, but since fading of the beet pigment during heating is not sufficient, browning using another browning agent is performed.

Patent Document 1 discloses that an uncooked meat-like color (red color of beet pigment) in a meat-like food product is changed to brown by an agent released by heat treatment. Specifically, in Examples of Patent Document 1, it is described that a browning agent is bound to an inert yeast cell wall material, added to a food product, and heat-cooked to release the browning agent from the yeast cell wall material to be browned.

Non-Patent Document 1 describes that a red beet has a plurality of endogenous enzymes such as polyphenol oxidase, and there is a possibility of causing fading if these endogenous enzymes are not appropriately inactivated (page 2368, right column, lines 12 to 9 from the bottom).

Patent Document 2 describes that enzymatic fading and browning of a food product are caused by oxidation and polymerization of a pigment by the action of polyphenol oxidase to form a brown melanin pigment, and that a method for partially preventing the enzymatic fading and browning by heating (blanching) or inactivation of an enzyme by an enzyme inhibitor is used (paragraph 0007).

### PRIOR ART DOCUMENTS

### PATENT DOCUMENTS

Patent Document 1: Japanese Unexamined Patent Application Publication (Translation of PCT Application) No. 2018-533945
Patent Document 2: Japanese Patent Laid-open Publication No. 2001-294768 NON-PATENT DOCUMENT

Non-Patent Document 1: International Journal of Food Science and Technology 2009, 44, 2365-2376

### SUMMARY OF THE INVENTION

### PROBLEMS TO BE SOLVED BY THE INVENTION

Since it is known that fading of the beet pigment occurs by polyphenol oxidase such as laccase, it can be expected that a combination of the beet pigment and the laccase leads to browning to some extent, but there is room for improvement in the degree of browning in order to reproduce reality closer to a color in thermal change of a food product such as a livestock meat.

Therefore, an object of the present invention is to newly provide a food product additive capable of further enhancing browning characteristics of a food product during heating.

### MEANS FOR SOLVING THE PROBLEM

The present inventor has found that when polysaccharides such as methyl cellulose and pectin are used in combination with a beet pigment and laccase and added to a food product, browning characteristics of the food product during heating is further enhanced. The present invention has been completed by further conducting studies based on this finding.

In other words, the present invention provides inventions of the following embodiments.

Item 1. A browning agent for a food product containing: (A) a pigment compound selected from the group consisting of betalain, anthocyan, curcuminoid, polyhydroxychalcone, and polyhydroxyanthraquinone; (B) multicopper oxidase; and (C) a polysaccharide.
Item 2. The browning agent for a food product according to item 1, wherein the component (C) is pectin.
Item 3. The browning agent for a food product according to item 1 or 2, wherein the component (A) is betalain.
Item 4. The browning agent for a food product according to item 3, containing a beet pigment containing the component (A).
Item 5. The browning agent for a food product according to any of items 1 to 4, wherein the component (B) is laccase.
Item 6. The browning agent for a food product according to any of items 1 to 5, wherein the food product is a meat-like processed food product for heating.
Item 7. A food product containing the browning agent for a food product according to any of items 1 to 6.
Item 8. A method for producing a heat-cooked food product, the method including a step of heat-cooking a food product containing the browning agent for a food product according to any of items 1 to 6 to brown the food product.

### ADVANTAGES OF THE INVENTION

According to the present invention, a food product additive capable of further enhancing browning characteristics is provided. For this reason, a color prior to heating of a food product can be reproduced by being added to the food product, and the food product can be browned by being more effectively faded during heating, and a color change during heating can also be reproduced more realistically.

### BRIEF DESCRIPTION OF THE DRAWINGS

Fig. 1 is a spectral reflection curve of a heat-cooked food product cooked using a browning agent for a food product of Example 1.
Fig. 2 is a spectral reflection curve of a heat-cooked food product cooked using a browning agent for a food product of Example 2.
Fig. 3 is a spectral reflection curve of a heat-cooked food product cooked using a browning agent for a food product of Example 3.

### EMBODIMENTS OF THE INVENTION

### 1. Browning agent for food product

A browning agent for a food product of the present invention is characterized by containing (A) a pigment compound (hereinafter, also referred to as "predetermined pigment compound" or "component (A)") selected from the group consisting of betalain, anthocyan, curcuminoid, polyhydroxychalcone, and polyhydroxyanthraquinone, (B) multicopper oxidase (hereinafter, also referred to as "component (B)"), and (C) a polysaccharide (hereinafter, also referred to as "component (C)"). Hereinafter, a method for producing the browning agent for a food product of the present invention will be described in detail.

### (A) Predetermined pigment compound

The browning agent for a food product of the present invention contains a predetermined pigment compound as the component (A). The predetermined pigment compound is selected from the group consisting of betalain, anthocyan, curcuminoid, polyhydroxychalcone, and polyhydroxyanthraquinone. These pigment compounds reproduce a color prior to heating of a food product, such as a color of a livestock meat, and also fade (brown) during heating, so that a color change during heating can also be reproduced.

Examples of the betalain include betacyanin and betaxanthin. Examples of the betacyanin include betanin (glycoside of betanidine), betanidine (aglycone of betanin), isobetanin (glycoside of isobetanidine), isobetanidine (aglycone of isobetanin), probetanin, and neobetanin. Examples of the betaxanthin include vulgaxanthin, miraxanthin, portulaxanthin, and indicaxanthin.

Examples of the anthocyan include anthocyanin and anthocyanidin (aglycone of anthocyanin). The anthocyanidin is polyhydroxy-2-phenylbenzopyrylium (compound in which at least a plurality of phenolic hydroxy groups are bonded as substituents to 2-phenylbenzopyrylium), and examples thereof include pelargonidin, cyanidin (aglycone of rubrobracin or shisonin), delphinidin, aurantinidin, luteolinidin, peonidin, malvidin, petunidin, europinidin, and rosinidin. Examples of the anthocyanin, which is a glycoside of anthocyanidin, include rubrobracin (glycoside of cyanidin), shisonin (glycoside of cyanidin), and malonylshisonin (shisonin to which malonic acid is bonded).

Examples of the curcuminoid include curcumin, demethoxycurcumin, and bisdemethoxycurcumin.

Examples of the polyhydroxychalcone (compound in which at least a plurality of phenolic hydroxy groups are bonded as substituents to chalcone) include safflomin and carthamin.

Examples of the polyhydroxyanthraquinone (compound in which at least a plurality of phenolic hydroxy groups are bonded as substituents to anthraquinone) include carminic acid.

The above predetermined pigment compounds may be chemically synthesized products or natural products. When the above predetermined compounds are natural products, their origins are not particularly limited. Examples of the origins include plants such as beet (refers to Beta vulgaris ssp. vulgaris var. Vulgaris (a beet which is also referred to as table beet, red beet, or beetroot)), red radish, purple yarn, red perilla, purple cabbage, safflower, and turmeric; and organisms such as insects. More specifically, examples of the natural products that give the above compounds include natural pigments such as beet pigments (containing, as betalain, betanin, isobetanin, betanidine, and isobetanidine; as other pigments, phyllocactin, hylocerenin, amarantin, gomphrenin-I, II, III, iresinin, and celosianin-I, II), red radish pigments (containing, as anthocyan, pelargonidin and cyanidin), purple yarn pigments (containing, as anthocyan, cyanidin and peonidin), red perilla pigments (containing, as anthocyan, shisonin and malonylshisonin), purple cabbage pigments (containing, as anthocyan, rubrobracin), safflower pigments (containing, as polyhydroxychalcone, safflomin and carthamin), turmeric pigments (containing, as curcuminoid, curcumin), and cochineal pigments (containing, as polyhydroxyanthraquinone, carminic acid).

The above predetermined pigment compounds may be used singly or in combination of two or more kinds thereof.

Among the above predetermined pigment compounds, from the viewpoint of further improving browning characteristics, betalain is preferred, and betanin, betanidine, isobetanin, and isobetanidine are more preferred.

In addition, in order to use the above predetermined pigment compounds, the above natural pigments themselves containing the pigment compounds (i.e., natural pigments isolated from the above organism) may be used, extracts containing the pigment compounds of an organism containing the pigment compounds may be used, or an organism themselves containing the pigment compounds may be used. When these isolated natural pigments, extracts, and/or organisms themselves are used, the above isolated natural pigments, extracts, and organisms themselves may be used singly or in combination of two or more kinds thereof. Among these isolated natural pigments, extracts, and organisms themselves, from the viewpoint of further improving browning characteristics, beet pigments, beet extracts, and beets are preferred, beet extracts and beets are more preferred, and beets are further preferred.

The content of the component (A) in the browning agent for a food product according to the present invention is not particularly limited, and an amount that allows the browning agent for a food product to effectively color a food product as an additive is appropriately set. For example, the content of the component (A) in the browning agent for a food product of the present invention is, for example, 0.002 to 0.95 wt% in total. Alternatively, when the component (A) is a natural product derived from the above organism, the content of the component (A) in the browning agent for a food product of the present invention is, for example, 2 to 95 wt% in total in terms of dry weight of the above organism as a raw material.

### (B) Multicopper oxidase

The browning agent for a food product of the present invention contains multicopper oxidase as the component (B).

The multicopper oxidase used in the present invention is a group of enzymes containing a plurality of copper atoms in a molecule and oxidizing polyphenol, methoxyphenol, diamine, bilirubin, ascorbic acid, and the like with molecular oxygen. The number of contained copper atoms is usually 2 to 8 as known so far, but this number is not particularly limited because it varies depending on the state of the enzyme preparation at the time of analysis and the analysis method. Examples of the enzyme classified as the multicopper oxidase include laccase, bilirubin oxidase, ascorbic acid oxidase, and ceruloplasmin.

These multicopper oxidases may be used singly or in combination of two or more kinds thereof. Among these multicopper oxidases, from the viewpoint of further enhancing browning characteristics, laccase is preferred.

The laccase is an enzyme having phenol oxidase activity (EC 1.10.3.2). Specific examples of the laccase include laccases derived from microorganisms such as fungi and bacteria, and more specific examples thereof include laccases derived from the genera Aspergillus, Neurospora, Podospora, Botrytis, Collybia, Fomes, Lentinus, Pleurotus, Pycnoporus, Pyricularia, Trametes, Rhizoctonia, Rigidoporus, Coprinus, Psatyrella, Myceliophtera, Schtalidium, Polyporus, Phlebia, Coriolus, and the like.

These laccases may be used singly or in combination of two or more kinds thereof. Among these laccases, from the viewpoint of further enhancing the effect of improving browning characteristics, laccase derived from the genus Trametes and laccase derived from the genus Aspergillus (more preferably laccase derived from Aspergillus oryzae) are preferred, and laccase derived from the genus Trametes is further preferred.

The blending amount of the component (B) in the browning agent for a food product of the present invention is not particularly limited, but the content of the component (B) with respect to 1 g of the component (A) is, for example, 2,000 to 500,000,000 U or 10,000 to 250,000,000 U, and from the viewpoint of further enhancing the effect of improving browning characteristics, the content is preferably 20,000 to 150,000,000 U, 30,000 to 90,000,000 U, or 40,000 to 30,000,000 U, and more preferably 50,000 to 10,000,000 U, 75,000 to 7,500,000 U, 100,000 to 5,000,000 U, or 150,000 to 2,500,000 U. Alternatively, when the component (A) is a natural product derived from the above organism, the content of the component (B) with respect to 1 g in terms of dry weight of the organism as a raw material of the component (A) is, for example, 20 to 500,000 U or 100 to 250,000 U, and from the viewpoint of further enhancing the effect of improving browning characteristics, the content is preferably 200 to 150,000 U, 300 to 90,000 U, or 400 to 30,000 U, and more preferably 500 to 10,000 U, 750 to 7,500 U, 1,000 to 5,000 U, or 1,500 to 2,500 U.

For the activity of the multicopper oxidase, when 0.1 ml of an enzyme liquid is added to 3.0 ml of a 1.0 mg/ml solution of 2,2'-Azino-di-[3-ethylbenzthiazoline sulfonate] (ABTS) as a substrate, reaction is performed at 25°C, and the absorbance at 405 nm after 1 minute and 3 minutes is measured, the amount of enzyme that increases the absorbance at 405 nm by 1.0 OD per minute is defined as 1 unit (U).

### (C) Polysaccharide

The browning agent for a food product of the present invention contains a polysaccharide as the component (C). When the polysaccharide is used in combination with multicopper oxidase, it is possible to improve browning characteristics of a food product colored with a predetermined pigment compound during heating.

The polysaccharide used in the present invention is not particularly limited, but usually, a thickening polysaccharide (gelling agent) which is a polysaccharide derived from a plant cell wall or a derivative thereof is used. The thickening polysaccharide may be either a thermally irreversible gelling agent or a thermally reversible gelling agent.

Examples of the thermally irreversible gelling agent include pectin, gellan gum, glucomannan, alginic acid, and salts thereof (alkali metal salts such as sodium salts and alkaline earth metal salts such as calcium salts). Examples of the pectin include HM pectin having a degree of esterification (DE) of 50% or more and LM pectin having a DE of less than 50%.

Examples of the thermally reversible gelling agent include a derivative of cellulose (a compound having a cellulose backbone obtained by biologically or chemically performing a treatment such as introduction of a functional group and/or depolymerization using cellulose as a raw material, and examples thereof include methyl cellulose (MC), hydroxypropyl cellulose (HPC), and hydroxypropyl methyl cellulose (HPMC)), carrageenan, xanthan gum, gelatin, agar, and starch.

These polysaccharides may be used singly or in combination of two or more kinds thereof.

Among the above polysaccharides, from the viewpoint of further enhancing browning characteristics, a thermally irreversible gelling agent is preferred, and pectin is more preferred. The origin of pectin is not particularly limited, and examples thereof include citrus peel (e.g., lemon, orange, and the like), apple, and beet. The beet from which pectin is derived is Beta vulgaris ssp. vulgaris var. Altissima (a beet which is also referred to as sugar beet).

Furthermore, among types of pectin, from the viewpoint of further enhancing browning characteristics, beet-derived pectin is preferred. Among types of pectin, from the viewpoint of further enhancing browning characteristics, HM pectin is preferred, and HM pectin having a DE of 55% or more is more preferred. Furthermore, among types of pectin, from the viewpoint of further enhancing browning characteristics, pectin containing ferulic acid is preferred, and the content of ferulic acid in the pectin is, for example, 0.3 to 3 wt%, preferably 0.4 to 2 wt%, and further preferably 0.5 to 1 wt%.

The blending amount of the component (C) in the browning agent for a food product of the present invention is not particularly limited, but the content of the component (C) with respect to 1 part by weight of the component (A) is, for example, 5 to 50,000 parts by weight in total, and from the viewpoint of further enhancing the effect of improving browning characteristics, the content is preferably 10 to 25,000 parts by weight or 50 to 10,000 parts by weight, and more preferably 100 to 5,000 parts by weight or 150 to 2500 parts by weight in total. Alternatively, when the component (A) is a natural product derived from the above organism, the content of the component (C) with respect to 1 part by weight in terms of dry weight of the organism as a raw material of the component (A) is, for example, 0.05 to 50 parts by weight in total, and from the viewpoint of further enhancing the effect of improving browning characteristics, the content is 0.1 to 25 parts by weight or 0.5 to 10 parts by weight, and more preferably 1.0 to 5.0 parts by weight or 1.5 to 2.5 parts by weight. Furthermore, the content of the component (C) with respect to 1 U of the component (B) is, for example, 0.000005 to 0.05 g or 0.00001 to 0.025 g in total, and from the viewpoint of further enhancing the effect of improving browning characteristics, the content is preferably 0.000025 to 0.01 g or 0.00005 to 0.005 g, and more preferably 0.0001 to 0.0015 g or 0.0005 to less than 0.001 g in total.

### Other components contained

The browning agent for a food product of the present invention may contain a sitologically acceptable base and/or additive as necessary in addition to the above-mentioned components. Examples of such a base and an additive include excipients, binders, disintegrants, lubricants, isotonizing agents, plasticizers, dispersants, emulsifiers, solubilizing agents, wetting agents, stabilizers, suspending agents, adhesives, coating agents, gloss agents, water, fats and oils, ester oils, waxes, hydrocarbon bases, fatty acids, lower alcohols, higher alcohols, water-soluble polymers, surfactants, metal soaps, polyhydric alcohols, pH adjusting agents, buffers, antioxidants, ultraviolet inhibitors, preservatives, flavoring agents, fragrances, powders, pigments (other than the component (A)), and chelating agents. These bases and additives may be used singly or in combination of two or more kinds thereof. In addition, the contents of these bases and additives may be appropriately set from known ones according to the type and/or dosage form of an additive component to be used.

### Dosage form

The dosage form of the browning agent for a food product of the present invention is not particularly limited, and may be any of a powder, a granule, a liquid, and the like. These dosage forms can be prepared using a sitologically acceptable base material and/or additive, and the types and the blending amounts of the base material and the additive are also known in the field of formulation technology.

### Application

The browning agent for a food product of the present invention is used for the purpose of reproducing a color of a food product such as a blood color of a livestock meat during unheated prior to heating of the food product, and for the purpose of browning the food product when heated by fading and reproducing a color change when heating of the food product.

Improvement in the degree of browning can be confirmed at least by reduction in the degree of red color development derived from the component (A). The reduction in the degree of red color development can be quantitatively confirmed at least by reduction in reflection at a red wavelength (specifically, 640 to 770 nm) when a reflectance curve is acquired in a wavelength range of 400 to 700 nm.

In a preferred embodiment, improvement in the degree of browning can be confirmed by reduction in the degree of red color development and increase in the degree of yellow color development. The reduction in the degree of red color development and the increase in the degree of yellow color development can be quantitatively confirmed by reduction in reflection at a red wavelength (specifically, 640 to 770 nm) and increase in reflection at a yellow wavelength (specifically, 550 to 590 nm) when a reflectance curve is acquired in a wavelength range of 400 to 700 nm.

The food product is not particularly limited as long as it is a food product on the premise of heat-cooking, and it requires reproducing a color of the food product during unheated prior to heating of the food product and browning the food product by fading when heating of the food product. Typically, examples of the food product include a meat-like processed food product for heating.

Specific embodiments of the food product and specific embodiments of use of the browning agent are as described in detail in "2. Food product containing browning agent for food product" and "3 . Method for producing heat-cooked food product" described below.

### 2. Food product containing browning agent for food product

The browning agent for a food product (hereinafter, also simply referred to as "browning agent") of the present invention shown in the above "1. Browning agent for food product" is used by being added to a food product. Accordingly, the present invention also provides a food product containing a browning agent.

The food product of the present invention is a food product on the premise of heat-cooking that reproduces the color of the food product during unheated and is imparted with characteristics of browning the food product by fading when heated. Typical examples of the food product of the present invention include a meat-like processed food product for heating. The meat-like processed food product is a food product in which a livestock meat processed food product is reproduced as a substitute meat of a plant protein, and specific embodiments thereof include hamburg steak, meat ball, patty, meat loaf, minced cutlet, and the like.

The food product of the present invention specifically contains a protein material and a browning agent. The protein material is not particularly limited, but preferably includes a plant protein material.

The form of the plant protein material is not particularly limited, and may be either a powdered form or a textured form. When a textured plant protein material is used, from the viewpoint of improving binding characteristics and the like, it is preferable to combine and blend a powdered protein (particularly, a powdered pea protein and the like).

The textured plant protein material (hereinafter, also referred to as "textured plant protein material") is known as a substitute meat (pseudo meat), and typical examples thereof include a material in which a raw material mixture containing a plant protein and water is extruded with an extruder or the like and dried or frozen to be textured into a meat-like material.

More specific forms of the textured plant protein material include a granular form and a fibrous form. Examples of the granular form include a massive form having various sizes such as a small grain type, a large grain type, and a block type (the size increases in the order of the small grain type, the large grain type, and the block type); and a flat form having various sizes such as a flake type, a fillet type, and a slice type (the size increases in the order of the flake type, the fillet type, and the slice type).

More specific examples of the textured plant protein material include a granular plant protein and a fibrous plant protein. The granular plant protein and the fibrous plant protein both refer to those defined in the "Japanese Agricultural Standards for Vegetable Proteins". However, when the textured plant protein material is used in the present invention, the textured plant protein material is not limited thereto as long as it is a material textured into a meat-like material as described above.

Regarding the textured plant protein material that can be used in the present invention, the type of plant protein, the characteristics other than the content ratio of plant protein (e.g., properties, moisture content, grain size, product temperature, raw materials other than food product additives, food product additives, chewiness, water retainability, foreign matters, content amount), and the measurement method thereof can conform to the characteristics and the measurement method defined in the "Japanese Agricultural Standards for Vegetable Proteins".

The type of plant protein contained in the plant protein material is not particularly limited, but examples thereof include proteins of pulse crops such as soy, broad bean, pea, chickpea, mung bean, lupini bean, and kidney bean; proteins of cereal crops such as barley, rice, wheat, rye, oat, buckwheat, Japanese barnyard millet, foxtail millet, teff, quinoa, and corn; proteins of nuts and seeds such as hemp, canary seed, linseed, almond, cashew nut, hazelnut, pecan nut, macadamia nut, pistachio, walnut, Brazil nut, peanut, coconut, pili nuts, chestnut, sesame, and pine nut; and proteins of algae.

The plant protein contained in the plant protein material may contain one of the above plant proteins singly or two or more kinds thereof. Among these plant proteins, from the viewpoint of more effectively enjoying the browning effect by the browning agent, proteins of pulse crops and proteins of cereal crops are preferred, soy proteins, pea proteins, and wheat proteins are more preferred, and pea proteins are further preferred.

The content (A dry state of the plant protein material is used as a reference. The same applies hereinafter.) of the plant protein contained in the plant protein material is not particularly limited, but examples thereof include 30 wt% or more and 40 wt% or more, preferably 50 wt% or more, more preferably 60 wt% or more, still more preferably 70 wt% or more, and yet more preferably 80 wt% or more. The upper limit of the content range is not particularly limited, but examples thereof include 90 wt% or less.

The food product of the present invention may contain other raw materials and/or food product additives as necessary, in addition to the protein material and the browning agent. Examples of the other raw materials include other food materials such as vegetables and grains; water, oils and fats, salt, sugar, spices, extract concentrates of animals and plants, and protein hydrolysates. Examples of the food product additives include tissue improvers such as calcium sulfate; seasonings such as sodium L-glutamate, disodium 5'-ribonucleotide, disodium 5'-inosinate, and disodium 5'-guanylate; colorants such as caramel I, caramel III, caramel IV, and cocoa (excluding predetermined pigment compounds contained in the browning agent); antioxidants such as L-ascorbic acid; and fragrances.

The content of the browning agent in the food product is not particularly limited, but examples thereof include an amount such that the content of the component (A) in the food product is 0.0001 to 0.05 wt%, and from the viewpoint of more effectively enjoying the browning effect by the browning agent, the content is preferably 0.0003 to 0.025 wt%, and more preferably 0.0006 to 0.015 wt%. Alternatively, when the component (A) is a natural product derived from the above organism, the content of the component (A) in the food product is 0.1 to 5 wt% in terms of dry weight of the organism as a raw material, and from the viewpoint of more effectively enjoying the browning effect by the browning agent, the content is preferably 0.3 to 2.5 wt%, and more preferably 0.6 to 1.5 wt%.

The food product of the present invention is capable of preparing a food product mixture containing a protein material and the components (A) to (C) constituting a browning agent, and allowing a reaction for improving browning characteristics to proceed.

The treatment temperature of the food product mixture can be appropriately determined in consideration of the optimum temperature of the multicopper oxidase contained in the browning agent and the like, but examples thereof include 4 to 80°C, and preferably 15 to 70°C. The treatment time is not particularly limited, but examples thereof include 0.1 to 18 hours, and preferably 0.2 to 3 hours.

The food product mixture after the treatment is molded into a desired shape as necessary to obtain a food product containing a browning agent for a food product.

### 3. Method for producing heat-cooked food product

The browning agent for a food product (browning agent) of the present invention shown in the above "1. Browning agent for food product" can be added to a food product to make a form of the above "2. Food product containing browning agent for food product", and then heat-cooked to give a heat-cooked food product. Therefore, the present invention also provides a method for producing a heat-cooked food product, the method including a step of heat-cooking a food product containing the above browning agent for a food product to brown the food product.

The method for heat-cooking can be appropriately determined by those skilled in the art according to the type of a heat-cooked food product to be produced. Specific examples of the method for heat-cooking include boiling, baking (roasting, toasting, baking, grilling, broiling), steaming, and frying. These methods for heat-cooking may be used singly or in combination of two or more kinds thereof.

### EXAMPLES

Hereinafter, the present invention will be specifically described with reference to Examples, but the present invention is not to be construed as being limited to the following Examples.

### [Materials used]

**[Table 1]**

| Raw material | Product name | Manufacturer |
|---|---|---|
| Granular pea protein | TPP (protein content of 80 wt%) | PURIS |
| Powdered pea protein | NUTRALYS F85M (protein content of 85 wt%) | Roquette |
| Methyl cellulose | METOLOSE MCE-100TS (ED of 55% or more) | Shin-Etsu Chemical Co., Ltd. |
| Pectin (derived from beet^{(*1)})^{(*2)} | GENU pectin type BETA BI-J | Sansho Co., Ltd. |
| Beet^{(*3)} dry powder | KUMAMOTO RED BEET | Asagirifarm |
| Laccase | Laccase Y120 (derived from Trametes sp.) | Amano Enzyme Inc. |

| | | |
|---|---|---|
| (*1) Beta vulgaris ssp. vulgaris var. Altissima (*2) 0.5 to 1 wt% of ferulic acid is contained. (*3) Beta vulgaris ssp. vulgaris var. Vulgaris | | |

### [Method for measuring laccase activity value]

Enzyme activity of laccase was measured by the method described below using 2,2'-Azino-di-[3-ethylbenzthiazoline sulfonate] (ABTS, manufactured by Boehringer Mannheim) as a substrate.

ABTS was dissolved in 25 mM citrate buffer (pH 3.2) at a concentration of 1.0 mg/ml to prepare a substrate liquid. 3.0 ml of this substrate liquid was placed in a cuvette, preheated at 25°C, and then 0.1 ml of an enzyme liquid was added, stirred, incubated at 25°C, and the absorbance at 405 nm after 1 minute and 3 minutes was measured. The amount of enzyme that increases the absorbance at 405 nm by 1.0 OD per minute under this condition was defined as 1 unit (U).

### [Test Example 1]

Hot water (40°C) having a weight 5 times that of a granular pea protein was added, and the mixture was allowed to stand for 10 minutes for swelling. The moisture was removed, and 25 g each of the swollen granular pea proteins (TVPs) was weighed. 2.75 g of a powdered pea protein was mixed with the weighed swollen TVP, and additive components selected from a beet dry powder for blending a beet pigment containing betalain, methyl cellulose, pectin, and laccase were added in the amount shown in Table 2 to prepare a food product mixture. The amount shown in Table 2 means the blending amount in the food product mixture. The food product mixture was well mixed and molded into a hamburg steak shape, and the molded mixture was left to stand at room temperature for 60 minutes, and then baked in an oven at 190°C for 15 minutes to obtain a heat-cooked food product (heat-cooked meat-like processed food product).

**[Table 2]**

| | | Comparative Example 1 | Example 1 | Example 2 | Example 3 |
|---|---|---|---|---|---|
| Swollen granular pea protein | | 25 g | 25 g | 25 g | 25 g |
| Beet dry powder | Blending amount in food product mixture | 1 w/w%^{(*1)} | 1 w/w%^{(*1)} | 1 w/w%^{(*1)} | 1 w/w%^{(*1)} |
| Laccase | Amount per 1 g of swollen granular pea protein | - | 20 U^{(*2)} | 20 U^{(*2)} | 20 U^{(*2)} |
| Methyl cellulose | Blending amount in food product mixture | 2 w/w%^{(*3)} | 2 w/w%^{(*3)} | - | 2 w/w%^{(*3)} |
| Pectin | Blending amount in food product mixture | - | - | 2 w/w%^{(*3)} | 2 w/w%^{(*3)} |

| | | | | | |
|---|---|---|---|---|---|
| (*1) The blending amount of betalain in the food product mixture is 1 w/w% in terms of dry weight of the raw material (beet). (*2) 2000 U per 1 g in terms of dry weight of the raw material (beet) of betalain. (*3) 2 g per 1 g in terms of dry weight of the raw material (beet) of betalain, and 0.001 g per 1 U of laccase. | | | | | |

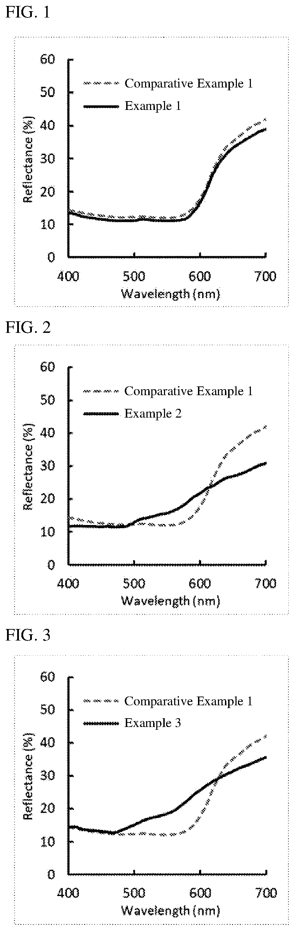

In order to evaluate the level of browning of the obtained meat-like processed food product, the spectral reflectance at 400 to 700 nm was measured using a spectrophotometer (CM-700d: Konica Minolta Sensing, Inc.). The obtained spectral reflectance curves are shown in Figs. 1 to 3.

As shown in Figs. 1 to 3, in each of the spectral reflectance curves of the heat-cooked food products according to Examples 1 to 3, reflection at a red wavelength (640 to 770 nm) was reduced, so that an effect of improving browning was observed. In particular, in the spectral reflectance curves of the heat-cooked food products according to Examples 2 and 3, reflection at a red wavelength (640 to 770 nm) was reduced, and reflection at a yellow wavelength (550 to 590 nm) was increased, so that a more remarkable effect of improving browning was observed.

## Claims

1. A browning agent for a food product comprising:
(A) a pigment compound selected from the group consisting of betalain, anthocyan, curcuminoid, polyhydroxychalcone, and polyhydroxyanthraquinone;
(B) multicopper oxidase; and
(C) a polysaccharide.

2. The browning agent for a food product according to claim 1, wherein the component (C) is pectin.

3. The browning agent for a food product according to claim 1, wherein the component (A) is betalain.

4. The browning agent for a food product according to claim 3, comprising a beet pigment containing the component (A).

5. The browning agent for a food product according to claim 1, wherein the component (B) is laccase.

6. The browning agent for a food product according to claim 1, wherein the food product is a meat-like processed food product for heating.

7. A food product comprising the browning agent for a food product according to claim 1.

8. A method for producing a heat-cooked food product, the method comprising a step of heat-cooking a food product containing the browning agent for a food product according to claim 1 to brown the food product.
